# EUROPEAN PATENT SPECIFICATION

(11) **EP 1 520 439 B1**
(45) Date of publication and mention of the grant of the patent: **23.02.2011**
(21) Application number: 03733750.8
(22) Date of filing: 16.06.2003
(51) Int. Cl.: H04W 64/00

(54) **METHOD IN A MOBILE TELECOMMUNICATION NETWORK FOR OBTAINING LOCATION AND TIME INFORMATION ABOUT USERS**
VERFAHREN IN EINEM MOBILKOMMUNIKATIONSNETZ ZUM ERHALTEN VON POSITIONS- UND ZEITINFORMATIONEN ÜBER BENUTZER
PROCEDE APPLICABLE A UN RESEAU DE TELECOMMUNICATIONS MOBILES POUR L'OBTENTION D'INFORMATIONS D'EMPLACEMENT ET DE TEMPS CONCERNANT DES UTILISATEURS

(30) Priority: 09.07.2002 SE 0202156
(43) Date of publication of application: 06.04.2005
(73) Proprietor: SmartTrust AB, 100 74 Stockholm (SE)
(72) Inventor: LANNERSTRÖM, Sten, S-171 63 Solna (SE)
(74) Representative: Söderman, Päivi Karin Lisbeth
(86) International application number: PCT/SE2003/001014
(87) International publication number: WO 2004/006601

(56) References cited:
- EP-A- 0 963 100
- EP-A- 1 128 284
- EP-A- 1 304 859
- WO-A-01/49054
- US-A- 5 923 763
- US-A1- 2002 083 323

## Description

### TECHNICAL FIELD

The invention is concerned with a method of operating a mobile telecommunication network for obtaining location and time information about users. The telecommunication network comprises one or more mobile stations, a service entity, a trusted third party, and an operator.

### BACKGROUND ART

In mobile telecommunication systems it is possible to determine with relative accuracy a geographic location of a mobile station. Such exact location information can be used for numerous purposes such as to provide directions to a user who is lost, or trying to avoid road congestion, for obtaining information about a location or object close to the mobile station, etc.

Several techniques are known for obtaining a general location of a mobile station. For example the general location may be determined using Location Service Area (LSA) identification techniques employed in known SolSA techniques. A very common technique is the Global Positioning System (GPS) generating location information from a mobile device. GPS is performed by means of a constellation of earth orbiting satellites that transmit standard signals that can be used for establishing the location of a user equipped with a GPS receiver. According to the GSM Specification 3GPP TS 11.14. V8.7.0 (20021-06) of the SIM application toolkit for the Subsciber Identity Module - Mobile Equipment (SIM ME) interface developed within the 3^{rd} Generation Partnership Project, local information is provided to the SIM including among others the mobile country code (MCC), the mobile network code (MNC) and the location area code (LAC). These codes and the cell ID are coded as in TS 04.08 [8] (Paragraphs 10.5.1.1 and 10.5.1.3. in GSM 04.08. The location area identification is sent to the mobile station.

WO 01/49056 presents a precise location of a mobile station through interaction with a mobile communication network and a global computer network. This is accomplished by inputting to a subject mobile station, a digital image of a geographic location surrounding the subject mobile station or an object proximate the mobile station and transmitting the digital image to a mobile communication network, such as General Packet Radio service (GPRS) or a Global System for Mobile Communication (GSM). A general location identifier is obtained for the mobile station, which identifier is compared with information based on the digital image to determine the geographic location of the mobile station.

US patent 6,154,727 relates to a system and method for tracking clients as they visit the locations of various recipients. The clients communicate with a computer that uses biometric parameters during the communication to identify the client. A method for tracking the clients making a cellular phone call is also disclosed, in which the geographic location of the phone call is identified.

DE19940649 uses a combination of a personal electronic signature, password or biometric characteristics as a digital signature and a GPS signal for location and time determination, which combination is sent along with a data file.

Also in US-patent 5,923,763, a GPS signal is used for authenticated location and time determination. Location signals are incorporated into a cryptographically assured timestamp to certify both the time and the geographical location at which a document was timestamped.

In timestamping the goal might be digital data certification as well as time certification of a document. Examples include camera data recorders to timestamp pictures, date/time recorders and computer clocks to timestamp file creation. Timestamping can also be used to conduct certain analysis of network traffic, so that a timestamp is associated with each data packet, the time stamp having a value representing the time at which the packet is placed onto the network. The timestamping device might sign the time with a device specific private key to provide authenticity in addition to integrity. Even greater assurance can be provided by adding IDs, digital certificates, asymmetric or symmetric encryption, or other cryptographic techniques. US patent 5,923,763 presents a solution which combines these methods and includes also GPS localization signals in the time stamp.

US patent 6,307,950 presents a method and system for embedding signatures within visual images in digital representation or film. A pattern of signature points selected from the pixels of an original image are used as signature in this solution.

EP patent application 1 128 284 disclosed location stamping of digital photos to catalogue the photos. For those digital cameras not having location means, arrangements are provided for enabling location data to be separately recorded at the time a photo is taken and then subsequently united with the photo.

EP patent application 1 304 859 is further mentioned as prior art, not public at the time of filing of the present application but having an earlier the priority date. It discloses a radio communication terminal apparatus with a microphone, a camera which captures a picture and outputs picture data, a GPS receiving unit, which determines a position and outputs position data, a memory storing the voice data, the picture data and the position data, a radio unit that transmits and receives the position data with the voice data and the picture attached, and a display unit through which information on positions of the user's communication partner and the user can be confirmed by displaying the position information together with a motion picture during a TV telephone communication.

Digital signatures and asymmetric encryption is most commonly performed by means of Public Key Infrastructure (PKI). PKI is a system that can be used to authenticate users, sign information or encrypt information. In a PKI system, two corresponding (also called asymmetric) keys, i.e. a public key and a private key, are used in connection with protecting information. Information, which is encrypted with one of the two keys, can be decrypted only with the other key. One important feature of PKI systems is that it is computationally unfeasible to use knowledge of one of the keys to deduce the other key. In a typical PKI system, each of the systems possesses a set of two such keys. One of the keys is maintained private while the other is freely published.

A PKI distributes one or several public keys and determines whether a certain public key can be trusted for certain usage or not. An important concept in infrastructures built on public key cryptography is that of the Certification Authority (CA). The weakness in a public key system is that, even though it is desirable that the public keys for all users are easily available, it is also required to assert that it is truly known that a particular public key really belongs to the user that one is communicating with. Thus CA is used for getting a digital certificate. It uses its good name to guarantee the correctness of a public key by signing the key, the signed key being called a digital certificate.

Wireless Application Protocol (WAP) defines an industry-wide specification for developing applications that operate over wireless communication networks including a set of protocols in transport, session and application layers. The WMLScript Crypto Library part of WAP provides cryptographic functionality for a WAP client. The browser has a WMLScript function, Crypto.signText, defined in said library document for associating a digital signature with generated data and uses special signature keys distinct from authentication keys for the signature computation.

The signature process is performed with an algorithm on a hash of the plain text to be signed. The hash is e.g. obtained by means of a standard hash function, such as MD-5 or SHA-1. The main function of the signature algorithm includes encryption of the hash with a private key. In addition, the algorithm has further features such as adding attributes to the message. One example of an attribute is the nounce, which is an arbitrary number so that the private key would be different each time it is used. Another attribute is a time attribute added to the message for avoiding reply attacks.

A special format for transmission of signed content to and from WAP devices is defined. In that format hash values of authenticated attributes are computed using a PKCS#7 template (an example of a structure for an encrypted message) to provide end-to-end authentication between WAP clients and devices supporting the PKCS#7 standard for signed data representation. In this formats, replay attacks are avoided by adding a time attribute by means of a counter.

### THE OBJECT OF THE INVENTION

The object of the invention is a method to prove the location of a mobile user at a given time in a new and practical way.

### SUMMARY OF THE INVENTION

The invention lies in a method for obtaining location and time information about users, as defined in claim 1. Accordingly, a digital file with a picture of the user is first created, which is stored in a mobile station. Location data is then retrieved from the mobile station. Either or both of the location data and the digital content is digitally signed in the mobile station. Said signed content and location data is combined and the combination is timestamped.

The advantageous embodiments of the invention are presented in the subclaims.

Whereas timestamping is a known method in itself for verifying the time for sending a given file, the method of the invention provides "spacestamping", since it is in first hand the location that is to be verified even if verification of the time also is important.

The invention is in the first hand meant to be used by mobile terminal users.

Spacestamping, used to prove that a person has visited a given location at a given time, is based on taking location-based information from the subscriber Identity Module (SIM) of a mobile terminal, assembling it together with binary data, such as a picture of the person, having this information being digitally signed through the mobile terminal, and having this digital signature being properly time-stamped. Thus the Spacestamp of the invention is a combined package containing a digital content (e.g. an image), location based information, the user's digital signature and a time-stamp.

Spacestamping gives the possibility to link a user with a location and provide means of assuring a third party that the user, having spacestamped information, was at a given location at a given moment of time.

The actual implementation of the invention, based on a combination of location-based information from the SIM, digital signatures, time-stamping and preferably an image can be done in several ways, some of which are more advantageous than others.

Two embodiments of the invention are presented below, one stronger and one weaker implementation.

In the most advantageous embodiment the digital content is a picture and it is taken by a camera, which is directly linked to the mobile terminal of the user. The mobile terminal then digitally signs the digital content. In other embodiments the digital content might e.g. be a text file or a voice message. Preferably, the user needs to enter a correct PIN in order to have access to the private key, necessary for the signature in the signature process. Location data is retrieved from the mobile terminal and added as a signed attribute.

The signed content is then distributed to an "authorized" trusted third party for a time-stamp. The "authorized" third party, which can be the workstation itself or an external time stamp server, creates a time-stamp and thus completes the spacestamp.

As the location information is a relative point presented in the form of codes as standardized information inside a mobile operators network it need to be translated if it is desired to have an understandable geographical position. This should preferably take place before the final time-stamp. The translation of a cell position into a geographical position can also be digitally signed. It should then be combined with the other parts into the final spacestamp.

In another embodiment the digital content, created by e.g. a digital camera is downloaded into e.g. a workstation and thereafter sent to the user terminal.

The location information is retrieved from the mobile terminal OTA (Over The Air) through an application residing in the workstation. The location data is converted into understandable geographical information, such as coordinates, and then combined with the digital content.

The digital content is sent to the mobile terminal for the user to be digitally signed. The user enters the correct PIN in order to have access to the private key, necessary for the signature.

The signed content is distributed back to the workstation and it is time-stamped. The time-stamp is handled by the workstation or distributed to, and handled by, an "authorized" trusted third party. The time-stamp completes the spacestamp.

The location information retrieved within the SIM is a relative point inside a mobile operators network. A proper timestamp should preferably include a fixed geographical position (at least a position within a reasonable accurate area) and not just a relative location within some operator network. Thus, it needs to be translated and the operator in use currently owns this translation table. This translation table can be made open to the public.

There are several possible uses for the invention. It is useful to have a method, which can be used to prove that you e.g. has been present at a given event, in which time and space location together with a digital signature includes all what is needed. With the method of the invention, a night-guard can for example spacestamp all location in a nightly round. Furthermore, like people collecting first-day-issues of stamps, people might in the future collect spacestamps from different cities, from first/last or other events etc.

In the following the invention will be described by means of some figures and detailed examples, which are for illustrative purposes only and not meant to restrict the invention in anyway, which is defined by the patent claims.

### BRIEF DESCRIPTION OF DRAWINGS

Figure 1 presents an example of a network wherein the invention can be applied and a first embodiment
Figure 2 presents a detailed example of another embodiment of the invention in the from of a signaling sequence diagram

### DETAILED DESCRIPTION

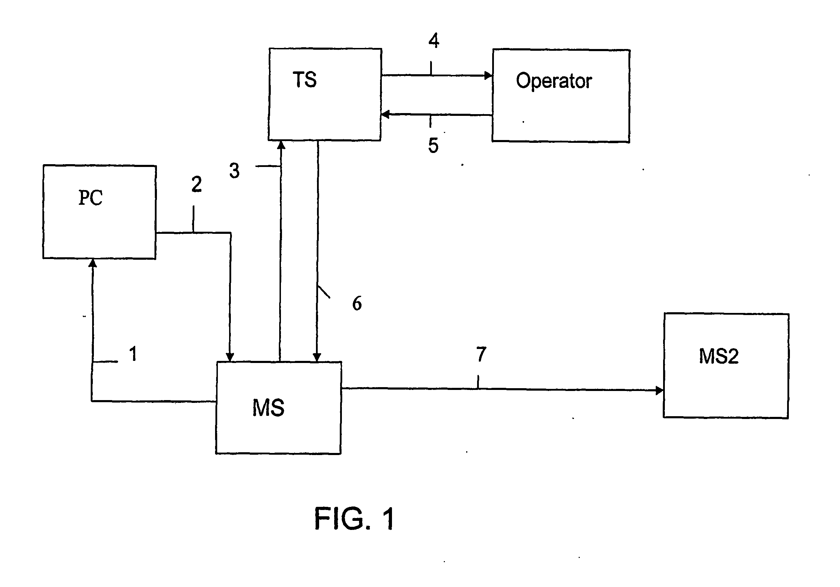

Figure 1 presents an example of a network wherein the invention can be applied. It is assumed that a user having a mobile station MS is visiting an event, such as a sports event. The event has a PC with which the mobile station MS can communicate. The MS is in turn in network contact with a server communicating with a telecom operator. The mobile station also communicates with another mobile station MS2 or PC.

The event offers certain services to mobile users visiting the event by means of the PC. The PC might e.g. have pictures or other files stored, which the users wish to send to other terminals together with an appropriate space stamp as a greeting message or to prove that they really visited the event. There might also be a digital camera in connection with the PC, with which a picture can be taken of the user. This is performed by having the user positioned in front of the PC, which takes the picture by means of a digital camera linked to the PC. The picture is then stored as a file in the PC.

A mobile user can get access to the services offered by the PC by e.g. entering the phone number and sending it from the mobile station to the PC as a request for the service (Step1).

After that the mobile user have entered the phone number and got access to the service, a picture stored in the PC or taken of the user is sent to the mobile station of the user (Step 2).

The user now wants to have a digital signature and a time stamp to the file or a representation of the file is sent from the PC in step 2. The representation of the file can e.g. be in the form of a hash of the file or other compressed form. A picture can e.g. be represented as in US patent 6,307,950 by a pattern of a sufficient number of points. The file or the representation of the file is sent e.g. to a time stamp server for time stamping in step 3

In step 3, the mobile station also sends location data retrieved from the SIM (Subscriber Identity Module) card to the server TS. As the location data is presented as the mobile country code (MCC), the mobile network code (MNC), the location area code (LAC) and cell ID coded as in TS 04.08 [8] mentioned earlier, the mobile station needs to have these location data converted to understandable geographical coordinates for the space stamp. The time stamp server TS fetches these geographical coordinates from the operator in steps 4,5 and send them together with the time stamped file or time stamped representation of the file back to the mobile station in step 6.

In an alternative embodiment the mobile station might itself fetch the geographical coordinates from the operator.

The mobile station then signs the time stamped file and sends it to the receiver in step 7. The format of the signed content differs from the one described in the prior art section for transmission to and from WAP devices in that a location data attribute is added to the structure.

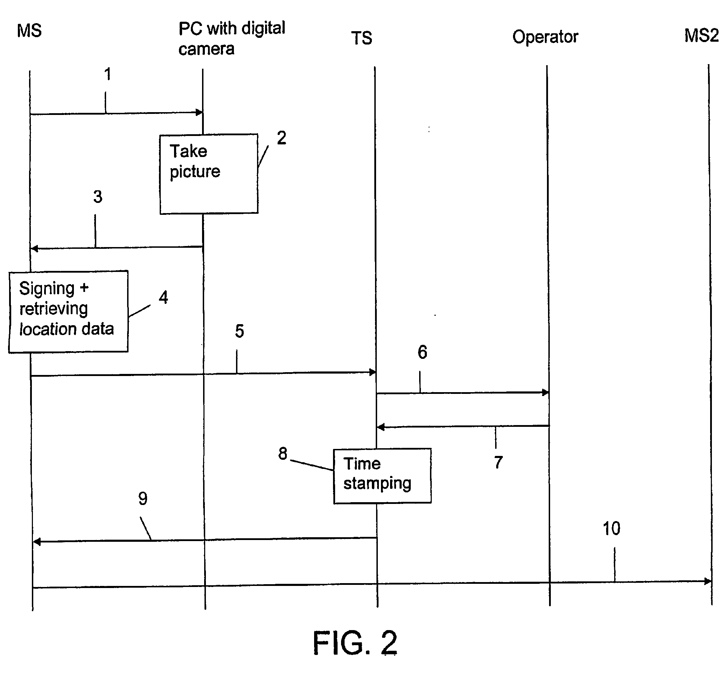

Figure 2 presents a detailed example of an other embodiment of the invention in the form of a signaling sequence diagram.

The network wherein this embodiment is implemented contains the same entities as in that of figure 1.

A mobile user requests for a service from a PC that is equipped with a digital camera in step 1. The service can consist of a picture or text file to be downloaded, or a service consisting of taking a digital picture of the user. The P notes the telephone number of the user and sends the requested file to the mobile station in step 3. Alternatively, a picture is taken of the user by the digital camera linked to the PC in step 2 before step 3 is performed.

In step 4, the mobile station signs the file, i.e. the picture or the text file. Retrieving of location data from the SIM of the mobile station is involved in the signing algorithm. These location data is used in the invention, possible together wit a picture taken with a digital camera as a space stamp to prove for the receiver that the user actually visited the event. The location data is presented as digital data not understandable, why the mobile uses needs to convert the location data to understandable geographical coordinates. For this purpose, a request for conversation data is sent in step 5 to the time stamp server also working as a server for other functions. The time tamp server TS fetch said geographical coordinates corresponding to the retrieved location data in steps 6, 7 from the operator and thereafter time stamps the signed message together with said geographical coordinates in step 8 and sends the time stamped package back to the mobile user in step 9. The mobile user can now send a time stamped message to the receiver in step 10 to prove that he actually has visited the given event. The message includes a picture of the visited event possible together with a picture of the user, location data in an understandable form, the digital signature of the user and a time stamp of the whole package.

## Claims

1. Method of operating a mobile telecommunication network for obtaining location and time information about users, the telecommunication network comprising one or more mobile stations, a service entity, a trusted third party, and an operator, the method being **characterized by** the following steps
a) creating a digital content,
b) storing the digital content in the mobile station,
c) retrieving location data of the mobile station from the mobile station,
d) digitally signing the digital content and/or the location data in said mobile station,
e) based on the result of step d), distributing a combination of signed content and location data to the trusted third party for time stamping, and
f) time-stamping the combination by the trusted third party.

2. Method of claim 1, **characterized in that** the digital signing is performed after step c), whereafter the combination of signed content and location data is time-stamped.

3. Method of claim 1 or 2, **characterized in that**, the digital content is created in step a) by taking a picture with a digital camera.

4. Method of claim 3, **characterized in that** the digital camera is linked with the mobile station, which gets the picture directly.

5. Method of claim 3, **characterized in that** the digital camera is a separate network element, whereby the picture taken by the digital camera is downloaded to a workstation and thereafter sent to the mobile station.

6. Method of any of claims 1 - 5, **characterized in that** the digital signature is performed in step d) with the user's private key stored in the mobile station.

7. Method of claim 6, **characterized in that** a PIN code is entered by the user to access the private key.

8. Method of any of claims 1 - 7, **characterized in that** the location data is retrieved from the mobile station during the signature process as an attribute, which is separately signed.

9. Method of any of claims 1 - 8, **characterized in that** before signing the location data, it is translated to geographical coordinates.

10. Method of any of claims 5 - 9, **characterized in that** the signed combination is distributed to the workstation for timestamping.

11. Method of any of claims 5 -10, **characterized in that** in step c) the location data is retrieved from the mobile station over the air through execution of an application residing in the workstation.

## Patentansprüche

1. Verfahren zum Betreiben eines mobilen Telekommunikationsnetzes zur Erfassung von Positions- und Zeitinformationen über Nutzer, welches Telekommunikationsnetz ein oder mehrere mobile Stationen, eine Service Entity, eine vertrauenswürdige dritte Partei und einen Operator umfasst, welches Verfahren durch die folgenden Schritte **gekennzeichnet** ist
a) Erzeugung eines digitalen Inhalts,
b) Speicherung des digitalen Inhalts in der mobilen Station,
c) Abrufen der Positionsdaten der mobilen Station von der mobilen Station,
d) digitale Unterzeichnung des digitalen Inhalts, und/oder der Positionsdaten in besagter mobiler Station,
e) basierend auf dem Ergebnis von Schritt d) Verteilung einer unterzeichneten Kombination aus unterzeichnetem Inhalt und Positionsdaten der vertrauenswürdigen dritten Partei zur Zeitstempelung, und
f) Zeitstempelung der Kombination durch die vertrauenswürdige dritte Partei.

2. Verfahren nach Anspruch 1, **dadurch gekennzeichnet, dass** die digitale Unterzeichnung nach Schritt c) durchgeführt wird, wonach die Kombination aus unterzeichnetem Inhalt und Positionsdaten zeitgestempelt wird

3. Verfahren nach Anspruch 1 oder 2, **dadurch gekennzeichnet, dass** der digitale Inhalt in Schritt a) angelegt wird, indem ein Bild mit einer Digitalkamera aufgenommen wird.

4. Verfahren nach Anspruch 3, **dadurch gekennzeichnet, dass** die Digitalkamera mit der mobilen Station verbunden ist, die das Bild direkt erhält.

5. Verfahren nach Anspruch 3, **dadurch gekennzeichnet, dass** die Digitalkamera ein getrenntes Netzwerkelement ist, wobei das von der Digitalkamera aufgenommene Bild auf einen Arbeitsplatz heruntergeladen und danach der mobilen Station übermittelt wird.

6. Verfahren nach einem der Ansprüche 1-5, **dadurch gekennzeichnet, dass** die digitale Unterzeichnung in Schritt d) mit dem privaten Schlüssel des Nutzers durchgeführt wird, der in der mobilen Station gespeichert ist.

7. Verfahren nach Anspruch 6, **dadurch gekennzeichnet, dass** vom Nutzer ein PIN-Code eingegeben wird, um Zugriff auf den privaten Schlüssel zu erhalten.

8. Verfahren nach einem der Ansprüche 1-7, **dadurch gekennzeichnet, dass** die Positionsdaten von der mobilen Station während des Unterzeichnungsprozesses als Attribut abgerufen werden, das getrennt unterzeichnet wird.

9. Verfahren nach einem der Ansprüche 1-8, **dadurch gekennzeichnet, dass** vor der Unterzeichnung der Positionsdaten sie in geographische Koordinaten übersetzt werden.

10. Verfahren nach einem der Ansprüche 5-9, **dadurch gekennzeichnet, dass** die unterzeichnete Kombination dem Arbeitsplatz zur Zeitstempelung verteilt wird.

11. Verfahren nach einem der Ansprüche 5-10, **dadurch gekennzeichnet, dass** die Positionsdaten in Schritt c) von der mobilen Station über den Äther abgerufen werden, indem eine am Arbeitsplatz abgelegte Anwendung ausgeführt wird.

## Revendications

1. Procédé de fonctionnement d'un réseau de télécommunications mobiles pour l'obtention d'informations d'emplacement et de temps concernant les utilisateurs, le réseau de télécommunications comprenant une ou plusieurs stations mobiles, une unité de service, un tiers de confiance, et un opérateur, le procédé étant **caractérisé en ce qu'**il y a les phases suivantes :
a) création d'un contenu numérique,
b) stockage du contenu numérique dans la station mobile,
c) récupérer l'information concernant l'emplacement de la station mobile à partir de la station mobile,
d) signer numériquement le contenu numérique et/ou l'information d'emplacement dans ladite station mobile,
e) sur la base du résultat de la phase d), distribution d'une combinaison d'informations sur le contenu signé et l'emplacement au tiers de confiance pour horodatage, et
f) horodatage de la combinaison par le tiers de confiance.

2. Procédé selon la revendication 1, **caractérisé en ce que** la signature numérique est réalisée après la phase c), après laquelle la combinaison d'informations concernant le contenu signé et l'emplacement est horodatée.

3. Procédé selon la revendication 1 ou 2, **caractérisé en ce que** le contenu numérique est créé dans la phase a) en prenant une photo avec un appareil photo numérique.

4. Procédé selon la revendication 3, **caractérisé en ce que** l'appareil photo numérique est relié à la station mobile, qui reçoit la photo directement.

5. Procédé selon la revendication 3, **caractérisé en ce que** l'appareil photo numérique est un élément séparé du réseau, la photo prise par l'appareil photo numérique étant chargée vers une station de travail et envoyée ensuite à la station mobile.

6. Procédé selon l'une quelconque des revendications 1 à 5, **caractérisé en ce que** la signature numérique est réalisée dans la phase d) avec la clé privée de l'utilisateur mémorisée dans la station mobile.

7. Procédé selon la revendication 6, **caractérisé en ce que** l'utilisateur donne un code NIP donnant accès à la clé privée.

8. Procédé selon l'une quelconque des revendications 1 à 7, **caractérisé en ce que** l'information concernant la location est récupérée de la station mobile pendant le processus de signature comme un attribut, qui est signé séparément.

9. Procédé selon l'une quelconque des revendications 1 à 8, **caractérisé en ce qu'**avant la signature de l'information d'emplacement, celle-ci est traduite en coordonnées géographiques.

10. Procédé selon l'une quelconque des revendications 5 à 9, **caractérisé en ce que** la combinaison signée est transmise à la station de travail pour horodatage.

11. Procédé selon l'une quelconque des revendications 5 à 10, **caractérisé en ce que** dans la phase c) l'information d'emplacement est récupérée de la station mobile par voie aérienne par la mise en oeuvre d'une application se trouvant dans la station de travail.
